(19) **Europäisches Patentamt / European Patent Office / Office européen des brevets**

(11) **EP 3 034 686 B1**

(12) **EUROPEAN PATENT SPECIFICATION**

(45) Date of publication and mention
of the grant of the patent:
**05.06.2019 Bulletin 2019/23**

(21) Application number: **14836027.4**

(22) Date of filing: **13.08.2014**

(51) Int Cl.:
*D06M 13/513* (2006.01)     *B60R 21/235* (2006.01)
*D03D 1/02* (2006.01)     *D06M 15/643* (2006.01)

(86) International application number:
**PCT/JP2014/071405**

(87) International publication number:
**WO 2015/022981 (19.02.2015 Gazette 2015/07)**

(54) **COATED WOVEN FABRIC**

BESCHICHTETES GEWEBE

TISSU TISSÉ ENDUIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2013  JP 2013168150**

(43) Date of publication of application:
**22.06.2016  Bulletin 2016/25**

(73) Proprietor: **ASAHI KASEI KABUSHIKI KAISHA
Tokyo 100-0006 (JP)**

(72) Inventor: **ISE, Fumiaki
Tokyo 101-8101 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**EP-A1- 2 949 797     WO-A1-2014/115864
JP-A- H09 240 405     JP-A- 2004 308 076
JP-A- 2011 058 118     JP-A- 2012 052 280
JP-A- 2013 514 465     JP-B2- 3 457 739**

**Description**

Technical Field

The present invention relates to a woven fabric suitable for an airbag or the like to be used as a bag in an airbag module as a device for protecting occupants during vehicle collision. In particular, it relates to a woven fabric that is excellent for use in an airbag having excellent stability of properties due to its sewing.

Background Art

Advances have been made in mounting of airbags in vehicles, as devices that serve to alleviate impact on the human body during collision accidents of vehicles such as automobiles. Airbags that absorb and alleviate impact on the human body by expanding with gas upon collision continue to be implemented for occupant protection, with installation of curtain airbags or side airbags, knee airbags, rear airbags and the like, in addition to driver seat and passenger seat airbags, in vehicles. Furthermore, for pedestrian protection, airbags have also been proposed that are installed so as to expand out of the vehicle cabin.

Such airbags are normally housed in a small folded state. When an accident impact has been detected by a sensor and the airbag is deployed and expanded, gas generated by an inflator causes the folding to be pushed and spread out, while the cover section of the housing is ripped open and the airbag flies out, receiving the human body at a point where it has sufficiently inflated.

In recent years, there has been a demand for airbags to deploy more rapidly in order to adapt to a wider range of collision conditions. They are therefore being deployed with high-temperature, high-pressure gas, with inflators using propellants of higher output. It is therefore necessary to increase the heat and pressure resistance of the bags, for more highly safe airbags. Another issue, for maintaining long-term performance, is to reduce the high-pressure air permeability after the passage of time.

Furthermore, demands are also increasing for achieving a wider range of timing for human body constraint and higher safety, by suppressing leakage of the deployment gas to maintain internal pressure for longer periods. In addition to airbags that regulate gas pressure with vent holes, it is especially important to minimize leakage of deployment gas with curtain airbags that are not provided with vent holes. In sewn airbags with coated woven fabrics, the sites of gas leakage are the sewn sections, and minimizing this has therefore become an issue.

Patent document 1 describes an airbag woven fabric having a resin coating film, the coating being with a specific resin composition, whereby the melting point increases as measured with a differential scanning calorimeter, and damage during high-temperature deployment of the airbag is avoided. However, the issues of restricting high-pressure air permeability with passage of time and suppressing gas leakage at the sewn sections are not resolved.

Also, Patent Document 2 discloses a technique for improving coating film adhesion by a coating method in which a coating resin is caused to permeate the fabric to a certain extent. However, the issues of restricting high-pressure air permeability with passage of time and suppressing gas leakage at the sewn sections are not resolved. JP-2012-052280-A discloses a woven fabric comprising synthetic fibers in which a silicone resin coating film is disposed in the woven fabric, the synthetic fibers are polyamide fibers and the oil adhesion rate is 0.15 wt%.

Prior Art Documents

Patent Documents

Patent Document 1: Japanese Unexamined Patent Publication (Kokai) No. 2004-149992
Patent Document 2: Japanese Unexamined Patent Publication (Kokai) No. 2004-124321

SUMMARY OF THE INVENTION

Problems to be Solved by the Invention

It is an object of the present invention to provide a woven fabric for an airbag, which is a lightweight woven fabric with low quantity of film coating, as a woven fabric for an airbag that has minimal high-pressure air permeability with passage of time, and exhibits stability of properties after sewing and excellent suppression of gas leakage at the sewn sections.

Means for Solving the Problems

The present inventors have found that by first relaxing the mutually restricting force between the weaving yarn of a woven fabric and providing a coating that promotes permeation of the resin, and then again increasing the mutual constraining force between the weaving yarn by heat contraction, it is possible to obtain a woven fabric structure in which melting behavior takes place at a higher temperature as measured with a differential scanning calorimeter, thereby minimizing high-pressure air permeability or air permeability at sewn sections, and we have thereupon devised this invention.

Specifically, the invention provides a woven fabric for an airbag according to claim 1 and a process for the production of such a woven fabric according to claim 7. Further modifications of the invention are detailed in the dependent claims.

Effect of the Invention

The woven fabric of the invention is a lightweight woven fabric in which a resin has been disposed, the woven fabric being able to form an excellent airbag that minimizes increase in high-pressure air permeability after continuous exposure to moist heat at the woven fabric sections or the sewn sections.

Brief Description of the Drawings

[Fig. 1] is a graph showing a DSC endothermic curve for a woven fabric of the invention.
[Fig. 2] is a graph showing a DSC endothermic curve for constituent yarn (warp) in a woven fabric of the invention.
[Fig. 3] is a graph showing a DSC endothermic curve for constituent yarn (weft) in a woven fabric of the invention.
[Fig. 4] is a graph showing a DSC endothermic curve after scouring of a woven fabric of the invention. Embodiments for Carrying Out the Invention

The invention will now be explained in detail.

The woven fabric of the invention is composed of synthetic fiber, the synthetic fiber forming the woven fabric is selected from among polyamide fiber and polyester fiber.

Polyamide fiber forming the woven fabric may be fiber made of a resin such as polyamide 6, polyamide 6/6, polyamide 11, polyamide 12, polyamide 6/10, polyamide 6/12, polyamide 4/6, or their copolymers, or a mixture thereof. Particularly preferred as polyamide 6/6 fiber is fiber composed mainly of polyhexamethyleneadipamide resin. Polyhexamethyleneadipamide resin is a polyamide resin with a melting point of 250°C or higher, composed of 100% hexamethylenediamine and adipic acid, but fiber made of polyamide 6/6 resin to be used for the invention may be fiber made of a resin in which polyamide 6, polyamide 6/I, polyamide 6/10, polyamide 6,T or the like is copolymerized or blended with polyhexamethyleneadipamide, in a range such that the melting point of the resin is not below 250°C.

The fibers may include various commonly used additives for improving productivity in the yarn production process or finishing process, or for improving the properties. For example, heat stabilizers, antioxidants, light stabilizers, lubricating agents, antistatic agents, plasticizers, flame retardants and the like may be added.

The fineness of the synthetic fiber constituting the woven fabric is preferably from 200 to 800 dtex. In addition, the synthetic fiber constituting the woven fabric is multifilament yarn composed of multiple filaments, the fineness of the single filaments being preferably 1 to 8 dtex. A small filament fineness of 8 dtex or smaller will facilitate obtainment of a woven fabric form with interlocking between the weaving yarn. If the filament fineness is 1 dtex or greater, filament damage will not be suffered during the processing step, and the mechanical properties of the woven fabric will not be impaired. The cross-sectional shape of a single filament is preferably essentially a circular cross-section. A flatter filament cross-sectional shape will make it difficult to dynamically suppress the high-pressure air permeability of the woven fabric.

The synthetic fiber preferably has no more than 100 broken filaments per $10^8$ m, resulting from filament breakage, so as to allow high-density weaving without warp sizing. Also, in order to obtain a converging property for the multifilaments, the air tangling is preferably from 5 to 30 times/m. If the air tangling is no greater than 30 times/m, converging of the filament groups in the woven fabric will be suitable, without excessive reduction in permeation of the coating resin into the woven fabric, thereby contributing to the adhesion and strength of the resin coating film. If the air tangling is 5 times/m or greater, this will help avoid halting of the loom caused by filament unravelling or monofilament breaking during the high-density weaving step.

The weaving yarn composed of the synthetic fiber is preferably conveyed to the warping step without sizing, and after having been passed through the crude beam, it is rewound onto the assembled beam for use as the warp thread. Also, the yarn is supplied as weft yarn, and weaving is carried out.

For the woven fabric of the invention, in the melting endothermic curve measured with a rising-temperature DSC (differential scanning calorimeter), the ratio of the endothermal quantity on the high-temperature side exceeds 45% of the overall heat absorbed. It more preferably exceeds 50% and even more preferably exceeds 55%. Yet more preferably, it exceeds 60%. A sample of the woven fabric is heated from room temperature at 5°C/min, the endothermic curve upon melting is observed, the melting behavior is divided into low-temperature-end melting and high-temperature side melting than reference temperatures, and the ratio of the high-temperature side melting endotherm is determined. The reference temperature is the maximum temperature of the melting endotherm when the constituent yarns obtained by disassembling the woven fabric have been observed by DSC under the same temperature elevating conditions. The maximum heat-absorption temperature is usually observed as the melting point of the constituent yarns.

For melting of the woven fabric, a high ratio of melting of the woven fabric at a higher temperature than the melting point of the constituent yarn indicates strong constraint among the weaving yarn, and a structure in which the weaving yarn or filaments in the weaving yarn are anchored together by the resin permeating between them. Both restricted structures might cause to result in melting at high temperature due to polymer crystal melting without heat absorption as a result of relaxation of the orientation of the polymer chains of the weaving yarn, and a high-temperature side melting peak is observed due to weaving yarn constraint and resin anchoring.

On the other hand, the low-temperature heat-absorbing sections often exhibit a narrow peak at the low-temperature side from the melting point exhibited by the constituent yarn, thought to be due to the fact that they are present without constraint in the yarn crimp structure of the woven fabric, which relaxes the heat orientation so that heat absorption proceeds. If the structure has few of such non-constrained heat-absorbing sections, then presumably the anchored structure is sufficiently developed.

While it is preferred to have a high endotherm ratio at the high temperature end, there is a limit to weaving yarn constraint by the woven fabric structure, which is about 80%.

If the structure has a high ratio of heat absorption on the high-temperature side, then the permeated anchored structure due to the resin disposed in the woven fabric will be rigid, and the air permeability after application of a stress load will be suppressed. In addition, the monofilament breaking is inhibited at the needle holes during sewing by fiber anchoring due to the resin disposed in the woven fabric, and the tightening due to the weaving yarn constraint contributes to reduced air permeability.

According to the invention, it is important for the resin disposed in the woven fabric to sufficiently permeate the woven fabric, and to maintain non-air permeability to a minimal amount. In order for the resin disposed in the woven fabric to form a non-air permeable film while continuously permeating the woven fabric, the high-density woven greige structure is finished by scouring of the woven fabric, to relax the constraint structure among the weaving yarn. During this time, the melting endothermic curve of the woven fabric by rising-temperature DSC infinitely approaches the melting endothermic curve of the constituent thread by rising-temperature DSC, and relaxation of the mutual constraint among the weaving yarn is seen. If the resin is disposed in the woven fabric with this structure, a woven fabric with satisfactorily permeating resin will be obtained. The woven fabric structure is preferably not overly tightened by heat setting and the like before the resin is disposed in the woven fabric. A woven fabric having the resin permeating in this manner exhibits a high-temperature side melting structure by resin anchoring.

Weaving is accomplished using a water jet loom since it will allow to produce the fabric with a low amount of oil picked up without the subsequently intensified scouring step.

The woven texture of the woven fabric is preferably a plain weave fabric with monofilaments basically of the same yarn for warp and weft. Also, in order to obtain a high-density plain weave fabric, both the warp and weft may be woven by a double mat weave to obtain a plain weave fabric.

The cover factor of the woven fabric is preferably 1900 to 2600. The cover factor (CF) is calculated in the following manner.

```
CF = Warp density (number/2.54 cm) × √warp yarn fineness
(dtex) + weft density (number/2.54 cm) × √weft yarn
fineness (dtex)
```

The cover factor is the filling degree of the yarns in the planar direction of the woven fabric, and if it is 1900 or greater it will be possible to satisfy the mechanical strength required for an airbag. A cover factor of no greater than 2600 can avoid difficulties in the weaving step.

The weaving yarn is supplied for weaving without twisting and without sizing. If the weaving is without sizing, it will not be necessary to reinforce the temperature conditions and the like in the scouring step. When weaving yarn is woven as twisted yarn, the converging property of the filaments bundle becomes too strong, with a weaving yarn flatness of less than 2.5, for example, and mutual constraint of the warp and weft thread in the woven fabric will not be firm. The resin permeation into the weaving yarn will also be reduced.

In the scouring step after weaving, the bent form of the thoroughly interlocking weaving yarn formed in the weaving step dissolves by contraction of the synthetic fibers in hot water. On the other hand, in order to adequately exhibit contraction of the synthetic fibers in the curing step, as the final step of processing the woven fabric, contraction of the synthetic fibers should be minimized in the scouring step after weaving. Therefore, a scouring method is used which does not cause mechanical deformation, such as rubbing, while in a widened state, at a temperature of no higher than 70°C, even more preferably no higher than 60°C and yet more preferably no higher than 50°C.

The woven fabric of the invention has an oil content (oil adhesion rate), as extracted with cyclohexane, of 0.005 wt% to 0.2 wt% with respect to the woven fabric weight. It is more preferably 0.005 to 0.15 wt%. It is yet more preferably 0.005 to 0.1 wt%. A cyclohexane-extracted oil content of 0.005 wt% or greater can reduce abrasion on the surface of the weaving yarn filaments, and prevent loss of tear strength of the woven fabric. It can therefore increase the puncture resistance of the airbag. On the other hand, if it is up to 0.2 wt% it will be possible to increase the adhesion of the resin and maintain air-flow resistance even after a load has been applied to the woven fabric.

In order to obtain an extracted oil content of between 0.005 wt% and 0.2 wt%, the spinning oil from the weaving yarn production step or the warping oil in the warping step for the warp yarn of the weaving yarn may be deoiled in a water jet loom step in which the woven fabric is produced, and conditions for the scouring step after weaving may be set as appropriate.

Even in the drying step, the state of mutual constraint among the weaving yarn in the scouring step after weaving must be maintained up to the coating step in which the resin is disposed in the woven fabric. The drying treatment is at no higher than 120°C and even more preferably no higher than 80°C.

The coverage of the resin disposed in the woven fabric of the invention is 10 to 50 g/m$^2$. It is more preferably 15 to 45 g/m$^2$. If it is 10 g/m$^2$ or greater, a greater coating amount inhibits the woven fabric air permeability, and the internal pressure retentivity is satisfactory. If it is 50 g/m$^2$ or less, a lower coating amount will contribute to a lightweight airbag and shorter deployment time (early deployment).

The coating resin disposed in the woven fabric is for non-permeability of the woven fabric surface, and silicone is used, which is soft without cracking and peeling of the coating even under cold conditions while being relatively resistant to combustion, and can contribute to flame retardance of the woven fabric. For silicone, a resin composition that undergoes thermal crosslinking by addition reaction is preferred, and there may be used a composition of a terminal alkenyl polyorganosiloxane with hydrogensilicone as the crosslinking agent, and addition of an addition reaction catalyst.

According to the invention, the coating fluid to be used to dispose the resin in the woven fabric is preferably an essentially solventless coating fluid, and the viscosity is preferably greater than 20,000 cP and less than 500,000 cP. It is more preferably 30,000 cP or greater and less than 300,000 cP. A lower coating fluid viscosity will increase seepage of the coating fluid into the woven fabric, but increasing the coating knife contact pressure will allow coating of a low coating amount. Increased seepage of the coating fluid into the woven fabric makes it impossible to achieve control to a low coating amount and makes it difficult to ensure uniformly low air permeability, and therefore it is preferably greater than 20,000 cP. Also, if it is less than 500,000 cP it will be possible to accomplish uniform coating, without producing coating spots. It will also be possible to avoid forming a coating film layer that has almost no seepage of the coating fluid into the woven fabric. The coating fluid viscosity can be lowered by a method of reducing the viscosity of the coating fluid by addition of an organic solvent, but this impairs the production environment and is preferably avoided. In other words, a solventless coating fluid is preferred.

For coating according to the invention, it is important to promote permeation of the resin into the woven fabric. Permeation of the resin promotes constraint of the weaving yarn by the resin. In order to reduce the viscosity of the coating fluid, to promote permeation of the resin, a method exists for lowering the viscosity of the resin itself, using a low-molecular-weight resin, for example. With a low-molecular-weight resin, however, the stress distortion-following property of the crosslinked resin is poor, and this can lead to stress gas leakage during airbag deployment. On the other hand, with a high-molecular-weight resin where the resin has a high viscosity, it is possible to prevent excessive permeation for lightweight coating, but there are problems as the density of resin adhesion sites on the woven fabric filaments is low, and adhesion between the woven fabric filaments and resin coating film becomes poor after passage of time with heat-moist treatment. In order to solve these problems, coating is preferably conducted with a solventless, high-molecular-weight (high-viscosity) resin base compound to which a low-molecular-weight alkoxysilane has been added. A low-molecular-weight alkoxysilane is a silane compound that is basically monomolecular, or is a molecule including a low-polymerized skeleton, having a molecular weight of no greater than 500 and 120 or greater, and preferably two or more alkoxyl groups are substituting on the silicone. Examples include methyltrimethoxysilane, methyltriethoxysilane, dimethyldimethoxysilane, dimethyldiethoxysilane and tetraethoxysilane. The low-molecular-weight alkoxysilane is preferably added at 1 to 10 wt% to the coating fluid. With addition of the low-molecular-weight alkoxysilane at 1 wt% or greater, seepage will be promoted by a dilution effect. The low-molecular-weight alkoxysilane progressively promotes adhesive reaction between the resin and woven fabric filaments until thermal crosslinking of the silicone resin is complete, and it can therefore reinforce the adhesion, while also eliminating local peeling under high pressure loads and improving retentivity of internal pressure, despite the low coating amount. In addition, since adhesive reaction causes the coating solution-diluting effect to be progressively lost, the situation whereby resin permeation is overly promoted resulting in an excess coating amount, or the woven fabric becomes stiff leading to poor storage, does not occur. An addition amount of no greater than 10 wt% will prevent air bubble defects in the resin layer caused by decomposed gas resulting from the reaction.

Another method of promoting permeation is a method of adjusting the viscosity, by adding to a crosslinking curable resin base compound, another low-viscosity resin base compound of the same type that undergoes crosslinking curing. For example, the resin base compound may be mixed with a high-viscosity, or high-polymerized compound, and a low-viscosity, or low-polymerized compound, to allow the aforementioned coating fluid viscosity to be achieved as a whole, so that the coating amount for the composition is the desired value. This can promote exposure of the filaments of the weaving yarn by the effect of the low-viscosity resin base compound. The viscosity of the low-viscosity resin base compound is preferably no greater than 10,000 cP in order to promote exposure of the filaments by permeation of the resin. In addition, the viscosity of the low-viscosity resin base compound is preferably 500 cP or greater, as this yields a composition containing no harmful silicone volatile components in the electronic parts. Furthermore, the low-viscosity resin base compound itself can contribute to internal pressure retentivity by participating in curing reaction. The low-viscosity resin base compound is preferably used at no greater than 45 wt% of the total resin amount. It is more preferably no greater than 35 wt%. If the low-viscosity resin base compound amount is no greater than 45 wt%, then a balance will be achieved, without the crosslinked properties by the high-viscosity resin base compound being significantly impaired. The low-viscosity resin base compound is also preferably used at 5 wt% or greater of the total resin amount.

According to the invention, the method of coating the resin is not particularly restricted but is preferably coating with a knife coater. Floating knife coating is especially preferred. With a knife coater, it is possible to form a resin coating film on the woven fabric surface and create a non-permeable state while causing permeation of a portion of the resin into the woven fabric, thereby controlling the state of constraint of the woven fabric fibers by the resin. The contact pressure between the knife and woven fabric during coating of the woven fabric is preferably 0.5 to 20 N/cm. It is more preferably between 1.0 N/cm and 10 N/cm, inclusive. If it is at least 0.5 N/cm, a higher contact pressure will result in a lower coating amount and lower coating coverage. At 20 N/cm or lower, damage to the woven fabric will be avoided and there will be no reduction in the physical properties of the woven fabric or reduction in the finished quality.

Also according to the invention, it is important for mutual constraint to be exhibited among the weaving yarn at the final stage.

With a curing step after the coating step, sufficient heat contracting force will be generated on the weaving yarn composed of the synthetic fiber, thereby producing a high-temperature side melting structure due to the constraint of the weaving yarn. The degree of contraction in the curing step is 1.5% or greater, as the total shrinkage in the warp and weft directions. It is more preferably 2% or greater. By expressing as large a degree of contraction as possible in the curing step, mutual constraint is produced among the weaving yarns. Mutual constraint among the weaving yarns reduces the effect of penetration through the needle holes during sewing, and minimizes air permeability through the needle holes along with permeation of the resin. A scouring step with minimal contraction can increase the shrinkage in the curing step. Depending on the nature of the contraction of synthetic fiber used as weaving yarn filaments, the shrinkage in the curing step will be 4% or less.

The curing temperature will depend on the design of the crosslinking reaction of the coating resin, but curing is accomplished at 150°C or higher. However, in order to adequately exhibit contraction of the synthetic fiber it is preferably 190°C or higher. The curing step may be conducted in multiple stages. For example, a primary curing step may be conducted at 150°C to 180°C, a secondary curing step conducted at 180°C to 200°C and a tertiary curing step conducted at 200°C to 220°C. The final end temperature is preferably 190°C to 220°C. The curing time may be appropriate from 30 seconds to 3 minutes, as the residence time in the curing step. It may be a time that allows the reactions of crosslinking of the resin and adhesion onto the filaments to develop in a uniform manner.

In the woven fabric of the invention, the constituent warp and weft weaving yarn is mutually constrained. As the converging conditions for the filaments of the weaving yarn, where the flatness of the weaving yarn is defined as the ratio of spread of the filaments in the planar direction of the woven fabric with respect to the spread of the filaments in the thickness direction of the woven fabric (planar direction/thickness direction), the warp yarn flatness and weft yarn flatness are of the same level, with a difference of no greater than 1.8. It is more preferably no greater than 1.5. If the difference between the warp yarn flatness and weft yarn flatness is 1.8 or smaller, the resin will tend to have a rigidly anchored structure when permeated into the woven fabric. In addition, it will be easier to maintain high adhesive force of the coating resin in the open between the warp and weft yarns that become spread open by the sewing machine needle.

Furthermore, the woven fabric of the invention is preferably in a spread state such that the warp yarn flatness and weft yarn flatness are each 2.5 or greater. If the weaving yarn flatness is 2.5 or greater, it will be easier to obtain a rigid structure in which the weaving yarn is mutually constrained.

The air permeability is preferably no greater than 0.3 cc/cm$^2$/sec, based on the Frazier method with a differential pressure of 125 Pa, and preferably as little air permeation as possible is detected.

The woven fabric of the invention preferably has a stitch air permeability of no greater than 8,000 mm$^3$/mm/sec, in dynamic air permeability evaluation at an applied pressure of 50 kPa, when a stitch line is created by sewing (#21 needle size, stitch number: 50 stitches/10 cm, no sewing thread). More preferably, it is no greater than 5,000 mm$^3$/mm/sec and even more preferably no greater than 3,500 mm$^3$/mm/sec.

In a rubbing test, the woven fabric of the invention preferably passes at least 200 times without peeling. The woven fabric of the invention also preferably passes at least 200 times without peeling in a rubbing test after passage of time with heat-moist treatment.

The woven fabric of the invention also preferably has a stitch air permeability increment of no greater than 1,000 mm$^3$/mm/sec after exposure for 100 hours to 95% RH, 85°C. The value is more preferably no greater than 800 mm$^3$/mm/sec. With a low stitch air permeability increment after passage of time in moist heat, the environmental resistance of the airbag will be increased and the reliability of deployment operation will be greater. There is preferably no increment.

The woven fabric of the invention is suitable for assembly for use in an airbag.

A sewn airbag comprising the woven fabric of the invention may be incorporated for use as an airbag module or airbag device.

Examples

The present invention will now be explained by examples and comparative examples, with the understanding that the invention is in no way limited only to the examples. The measurement methods and evaluation methods used in the present specification will be explained first.

(1) Number of tangles of weaving yarn: The number of tangles is the value determined by a water immersion method. The water bath for tangle number measurement had a length of 1.0 m between gauge marks, a width of 10 cm and a height (water depth) of 5 cm, and water supplied through a supply port to the exterior portions of the gauge marks of the water bath was drained as overflow. That is, fresh water was constantly supplied at a flow rate of about 500 cc/min to refresh the water in the measuring bath. This is useful, when the yarn is immersed and oil adhering to the yarn spreads over the water surface after which new yarn is then immersed, for preventing difficulty in opening the yarn. By thus constantly supplying fresh water, it is possible to remove oil films that have spread in the measuring bath. To calculate the number of tangles of the water-immersed yarn, the bath interior is preferably black. The yarn is immersed in the measuring bath in a relaxed state, the state of tangling is observed, and the number of tangles per 1 m length is visually read off. Ten repeated measurements are performed, and the average value is evaluated.

(2) Preparation of woven fabric sample: Preparation is under the standard conditions of JIS L0105(2006), and it is supplied for the each of measurements and evaluations.

(3) Coating amount: The coating amount was the woven fabric weight increment per unit area in the resin coating step. The coating amount can also be determined by analysis of the woven fabric in the following manner. A 10 cm-square test piece is precisely sampled from the woven fabric and cut up to less than about 5 mm square, cyclohexane is used for twice-repeated rinsing at 25°C for 5 minutes, and after air-drying, it is dried at 105°C for 12 hours with a hot air drier. The synthetic fiber is dissolved in a solvent. If the fiber of the woven fabric is polyamide fiber, the fiber is dissolved overnight at ordinary temperature using 250 ml of 90% formic acid, and the undissolved crosslinked silicone film is filtered out. The filtered out silicone film is thoroughly rinsed with a solvent and rinsed with water, and then subjected to hot air drying at 105°C, the absolute dry mass w (g) is measured, and the coating amount (g/m$^2$) is calculated.

(4) Oil adhesion rate (Oil pick up): Approximately 20 g of polyamide fiber woven fabric was sampled and allowed to stand for 1 hour and 30 minutes in a hot air drier at 105°C, after which the mass (S) was measured with an electronic scale. The oil portion of the woven fabric was subjected to solvent extraction for 8 hours with approximately 500 ml of cyclohexane, using a Soxhlet extractor, and after filtration, the solvent was removed and the oil recovered. The recovered oil was dried for 1 hour in a vacuum dryer at 5 mmHg, 25°C. It was then transferred to a desiccator and allowed to cool for 15 minutes, after which the weight of the recovered oil was measured. This was treated several times, and the amount of recovered oil in approximately 100 g portion of the woven fabric sample was measured. The oil adhesion rate was calculated, from the recovered oil amount with respect to the dry weight of the polyamide fiber woven fabric.

(5) Flatness difference: The yarn of the woven fabric was cut at the woven center, and the converging contour of filament bundles of the yarn was observed at the cross-section, for both the warp and weft. The ratio of spread of filaments in the planar direction of the woven fabric with respect to spread of the filaments in the thickness direction of the woven fabric (planar direction/thickness direction) was recorded as the flatness. Next, the absolute value of the difference in the flatnesses of warp and weft yarns was recorded as the flatness difference.

(6) Ratio of heat absorption on high-temperature side of DSC endothermic curve: A woven fabric sample was cut to a size capable of being loaded in a sampling pan, without disturbing (deforming) the woven state of the fabric, loading in approximately 5 mg. The yarns constituting the woven fabric were unraveled into warp and weft yarns and cut to lengths capable of being loaded into the sampling pan (#346-66963-91), loading in approximately 5 mg. An endothermic curve was obtained with melting using a DSC-60 by Shimadzu Corp., at a temperature-elevating rate of 5°C/min in an atmosphere with an air stream of 100 ml/min. A baseline was drawn between 230°C and 280°C, and the endotherm was analyzed. The average endothermic peak temperature for warp and weft in the constituent yarn obtained by disassembling (unraveling) the woven fabric was recorded as the reference temperature. The endothermic curve of the woven fabric was divided into a low-temperature side and high-temperature side with respect to the reference temperature, and the ratio (%) of the amount of heat absorbed on the high-temperature side in the endothermic curve was calculated.

(7) Frazier air permeability: This was evaluated by the Frazier method, based on JIS L 1096(2010):8.26.1A.

(8) Scrubbing count: A scrubbing/rubbing test was conducted based on ISO5981. The presence or absence of peeling on the resin-coating surface was observed every 50 rubs, and the maximum number of rubs without peeling was recorded as the scrubbing count.

(9) Scrubbing count after passage of time in moist heat: A woven fabric sample was set for 100 hours in a thermo-hygrostat at 95% RH, 85°C, and after restoring it to standard conditions, the scrubbing count was evaluated according to (8) above.

(10) Stitch air permeability:

1) Stitch treatment: A woven fabric sample was machine sewn without supplying sewing thread, with the resin coating film side facing downward. That is, the needle penetrated from the woven fabric toward the resin coating film side. The sewing needle was a size #21, and 4 parallel lines were formed at 1 cm spacings along the weaving yarn direction of the woven fabric with a 10 cm-long stitch, with stitching 50 stitches/10 cm.

2) Stitch air permeability: An FX3350 dynamic air permeability meter by TEXTEST AG was used. The resin-coating side of the woven fabric sample was set on the opposite side of the filling tank, with all of the stitch lines covering the air openings (81 mm$\phi$) sandwiching the woven fabric sample. That is, it was used for measurement of pressurized permeability from the woven fabric toward the resin-coating side. A filling tank with a filling pressure of 100 kPa and a filling volume of 404 cc was used, and the dynamic air permeability (mm/sec) at 50 kPa was measured from the air permeability-pressure curve. After measurement of the air permeability, the stitch length within the inner diameter of the opening was measured and totaled, and the air permeation length (mm) which resulted in about 300 mm was determined. Since the value of the dynamic air permeability (mm/sec) in the measuring device is displayed per open area (5,026 mm$^2$), it was converted to air permeation length (mm) to determine the stitch air permeability (mm$^3$/mm/sec).

When measurement was not performed because the pressure air accumulated in the filling tank was not discharged, it was considered to have essentially no air permeation, and the air permeability was judged to be 0 mm/sec.

(11) Stitch air permeability increment after passage of time in moist heat: After placing a woven fabric sample in a thermo-hygrostat at 95% RH, 85°C for 100 hours and restoring it to standard conditions, stitch treatment was conducted as in (10) above, and the stitch air permeability (mm$^3$/mm/sec) was evaluated. The increment from the stitch air permeability evaluated in (10) was recorded as the stitch air permeation increment after passage of time with heat-moist treatment (mm$^3$/mm/sec).

[Example 1]

Polyhexamethylene adipamide fiber, having a strength of 8.5 cN/dtex, was used as the weaving yarn. The fiber contained copper element at 50 ppm and iodine at 1500 ppm. The fiber had a fineness of 470 dtex, a round cross-section with 136 filaments, and a boiling water shrinkage ratio of 7.5%, and the number of tangles in water immersion was 15/m. For the warp yarn, the filaments were non-twisted, non-sized and aligned, and used for the warping beam, and for the weft yarn, the filaments were non-twisted, non-sized and directly supplied to the loom from the take-up package. With a water jet loom, the warp yarn tension on the loom was set to 0.25 cN/dtex, and a plain weave fabric was obtained at 400 rpm.

The woven fabric was rinsed for 1 minute at 50°C in a widened state, and dried at 110°C. Next, the woven fabric was coated with a coating solution containing 2 wt% tetraethoxysilane (TES) added to an addition reaction-crosslinking silicone fluid composed mainly of solventless methylvinylsilicone resin with a viscosity of 60,000 cP, using a floating knife coater, and then subjected to curing treatment at 210°C for 2 minutes to obtain a woven fabric for an airbag. The woven fabric contraction by the curing treatment was 2.6%, as the total in the warp and weft directions.

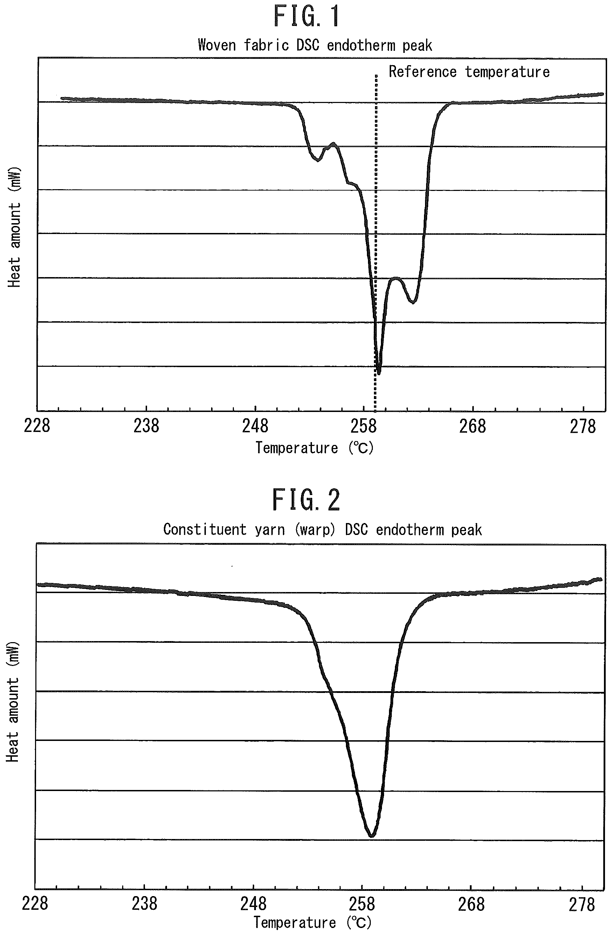

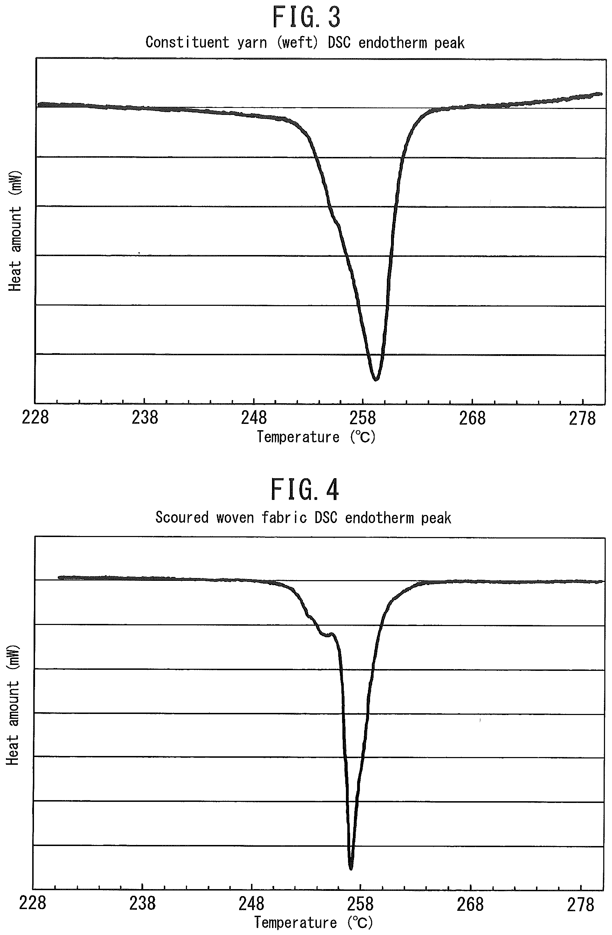

In DSC analysis of the constituent thread obtained by disassembling (unraveling) the woven fabric, the melting point was 259.0°C for both the warp and weft, and the endothermic curve had a ratio of heat absorption on the high-temperature side of the melting point of the constituent yarn, of 32%, for both warp and weft (Fig. 2 and Fig. 3). In DSC analysis of the woven fabric, ratio of heat absorption on the high-temperature side was 67% (Fig. 1). Incidentally, in DSC analysis of the woven fabric after scouring during the process, the ratio of heat absorption on the high-temperature side was 13% (Fig. 4). No peeling of the coating was confirmed up to 400 rubs, indicating satisfactory adhesion of the resin. No peeling of the coating film was observed up to 400 rubs even in a rubbing test after passage of time with heat-moist treatment. The adhesion of the resin was maintained by permeation of the resin into the woven fabric. For the stitch air permeability, the degree to which air permeability of the sewn sections of the airbag was suppressed was evaluated with a model using sewing needle holes without sewing thread, and in addition to adhesive reinforcement by permeation of the resin into the woven fabric, gas leakage at the needle hole was suppressed by development of mutual constraint among the weaving yarn. The stitch air permeability after passage of time with heat-moist treatment was also suppressed. The evaluation results are shown in Table 1.

[Example 2]

This was carried out in the same manner as Example 1, except that the scouring after weaving was at 60°C and the curing temperature was 200°C. The evaluation results are shown in Table 1. The ratio of heat absorption on the high-temperature side in DSC analysis was high, and was satisfactory both in the rubbing test and in the rubbing test after passage of time in moist heat. In addition, the stitch air permeability and stitch air permeability after passage of time in moist heat were both suppressed.

[Example 3]

This was carried out in the same manner as Example 1, except that the scouring after weaving was at 70°C and the curing temperature was 190°C. The evaluation results are shown in Table 1. The ratio of heat absorption on the high-temperature side in DSC analysis was high, and was satisfactory both in the rubbing test and in the rubbing test after passage of time in moist heat. In addition, the stitch air permeability and stitch air permeability after passage of time in moist heat were both suppressed.

[Example 4]

This was carried out in the same manner as Example 1, except that the scouring after weaving was at 70°C and the curing temperature was 150°C. The evaluation results are shown in Table 1. The ratio of heat absorption on the high-temperature side in DSC analysis was high, and was satisfactory both in the rubbing test and in the rubbing test after passage of time with heat-moist treatment. In addition, the stitch air permeability and the stitch air permeability after passage of time in moist heat were slightly increased but satisfactorily suppressed.

[Example 5]

This was carried out in the same manner as Example 4, except that the number of tangles of the polyhexamethylene adipamide fiber in water immersion was 25/m. The evaluation results are shown in Table 1. Permeation of the resin was slightly suppressed and the ratio of heat absorption on the high-temperature side in DSC analysis was slightly reduced, but the results were satisfactory in both the rubbing test and the rubbing test after passage of time with heat-moist treatment. In addition, the stitch air permeability and the stitch air permeability after passage of time in moist heat were slightly increased but satisfactorily suppressed.

[Example 6]

This was conducted in the same manner as Example 1, except that coating was with a coating solution containing 8 wt% tetraethoxysilane (TES) added to an addition reaction-crosslinking silicone solution composed mainly of solventless methylvinylsilicone resin with a viscosity of 60,000 cP, using a floating knife coater, and the coating amount was 35 g/m$^2$. The evaluation results are shown in Table 1. The weight of the woven fabric increased and the thickness was enlarged, but both the rubbing test and the rubbing test after passage of time in moist heat were satisfactory. In addition, the stitch air permeability and stitch air permeability after passage of time with heat-moist treatment were both suppressed.

[Example 7]

For the weaving yarn there was used polyethylene terephthalate fiber, having a fineness of 550 dtex, a filament number of 144, a strength of 7 cN/dtex, a boiling water shrinkage ratio of 2.2% and a number of tangles of 15/m. The process was otherwise in the same manner as Example 1, except that plain weaving was with a water jet loom, after which the curing temperature was 220°C. The evaluation results are shown in Table 1. The ratio of heat absorption on the high-temperature side in DSC analysis was high, and was satisfactory both in the rubbing test and in the rubbing test after passage of time in moist heat. In addition, the stitch air permeability and the stitch air permeability after passage of time in moist heat were slightly increased but satisfactorily suppressed.

[Comparative Example 1]

This was carried out in the same manner as Example 1, except that the scouring after weaving was at 90°C, heat setting at 190°C was performed instead of drying after scouring, and the curing temperature was 180°C. The evaluation results are shown in Table 1. Since contraction of the polyamide fiber during scouring was considerable with minimal contraction in the curing step, no constraint of the weaving yarn was to be expected, and the ratio of heat absorption on the high-temperature side in DSC analysis was low. Permeation of the resin into the woven fabric fiber occurred by relaxation of the woven fabric structure due to scouring, and the rubbing test was satisfactory, but tightening constraint between the woven fabric filaments after resin permeation was minimal, and the rubbing test evaluation result after passage of time with heat-moist treatment was low. Because of the low constraint between the fibers, the stitch air permeability and stitch air permeability after passage of time in moist heat were both high.

[Comparative Example 2]

This was carried out in the same manner as Example 1, except that the scouring after weaving was at 80°C, heat setting at 190°C was performed instead of drying after scouring, and the curing temperature was 180°C. The evaluation results are shown in Table 1. Since contraction of the polyamide fiber during scouring was considerable with minimal contraction in the curing step, no constraint of the weaving yarn was to be expected, and the ratio of heat absorption on the high-temperature side in DSC analysis was low. Permeation of the resin into the woven fabric fiber occurred by relaxation of the woven fabric structure due to scouring, and the rubbing test was satisfactory, but tightening constraint between the woven fabric fibers after resin permeation was minimal, and the rubbing test evaluation result after passage of time in moist heat was reduced. Because of the low constraint between the fibers, the stitch air permeability and stitch air permeability after passage of time with heat-moist treatment were both high.

[Comparative Example 3]

This was carried out in the same manner as Example 1, except that the scouring after weaving was at 90°C and the curing temperature was 180°C. The evaluation results are shown in Table 1. Since contraction of the polyamide fiber during scouring was considerable with minimal contraction in the curing step, no constraint of the weaving yarn was to be expected, and the ratio of heat absorption on the high-temperature side in DSC analysis was low. Permeation of the resin into the woven fabric fiber occurred by relaxation of the woven fabric structure due to scouring, and the rubbing test was satisfactory, but tightening constraint between the woven fabric fibers after resin permeation was minimal, and the rubbing test evaluation result after passage of time with heat-moist treatment was reduced. Because of the low constraint between the fibers, the stitch air permeability and stitch air permeability after passage of time with heat-moist treatment were both high.

[Comparative Example 4]

This was carried out in the same manner as Example 1, except that the scouring after weaving was at 80°C and the curing temperature was 180°C. The evaluation results are shown in Table 1. There was no relaxation of constraint of the polyamide fiber weaving yarn during scouring, and interior permeation of the coating resin was inhibited. Since there was minimal contraction in the curing step, no constraint of the weaving yarn was to be expected, and the ratio of heat absorption on the high-temperature side in DSC analysis was low. Permeation of the resin into the woven fabric fiber occurred by relaxation of the woven fabric structure due to scouring, and the rubbing test was satisfactory, but tightening constraint between the woven fabric fibers after resin permeation was minimal and the rubbing test evaluation result after passage of time with heat-moist treatment was reduced. Because of the low constraint between the fibers, the stitch air permeability and stitch air permeability after passage of time with heat-moist treatment were both high.

[Comparative Example 5]

Compared to Example 1, the scouring after weaving was at 80°C, heat setting at 190°C was performed instead of drying after scouring, and the curing temperature was changed to 190°C. In addition, the coating was with an addition reaction-crosslinking silicone coating fluid composed mainly of solventless methylvinylsilicone resin with a viscosity of 12,000 cP, using a floating knife coater, and the coating amount was 23 g/m$^2$. The evaluation results are shown in Table 1.

Since contraction of the polyamide fiber during scouring was considerable with minimal contraction in the curing step, no constraint of the weaving yarn was to be expected, and the ratio of heat absorption on the high-temperature side in DSC analysis was low. The coating resin was slightly weak in response to the stress of the rubbing test, but there was permeation of the resin into the woven fabric fibers by relaxation of the woven fabric structure due to scouring, and the rubbing test evaluation was satisfactory. On the other hand, since there was no tightening constraint between the woven fabric fibers after resin permeation, and adhesion-promoting components of the resin were not present, this resulted in a major reduction in the rubbing test evaluation after passage of time in moist heat. Because constraint did not develop between the woven fabric fibers after permeation of the resin, the stitch air permeability and stitch air permeability after passage of time with heat-moist treatment were both high.

[Comparative Example 6]

Compared to Example 1, scouring was not carried out after weaving and heat setting was performed at 190°C. In addition, the coating was with an addition reaction-crosslinking silicone coating solution composed mainly of solventless methylvinylsilicone resin with a viscosity of 15,000 cP, using a floating knife coater, and the coating amount was 18 g/m$^2$. The evaluation results are shown in Table 1.

Without scouring, there was no relaxation of constraint of the polyamide fiber weaving yarn, and interior permeation of the coating resin was suppressed. Since there was minimal contraction in the curing step, no constraint of the weaving yarn was to be expected, and the ratio of heat absorption on the high-temperature side in DSC analysis was markedly low. Residual oil also had an influence, and the rubbing test evaluation was slightly low. In addition, there was no tightening constraint between the woven fabric fibers after permeation of the resin, and the rubbing test evaluation after passage of time with heatt-moist treatment was markedly poor. Because of the lack of resin permeation and low constraint between the fibers, the stitch air permeability and stitch air permeability after passage of time with heat-moist treatment were both high.

[Comparative Example 7]

Compared to Example 1, no scouring was carried out after weaving, and the curing temperature was changed to 180°C. In addition, the coating was with an addition reaction-crosslinking silicone coating solution composed mainly of solventless methylvinylsilicone resin with a viscosity of 12,000 cP, using a floating knife coater, and the coating amount was 25 g/m$^2$. The evaluation results are shown in Table 1.

Without scouring, there was no relaxation of constraint of the polyamide fiber weaving yarn, and interior permeation of the coating resin was suppressed. Contraction occurred in the curing step resulting in constraint of the weaving yarn, but due to low permeation of the resin, the ratio of heat absorption on the high-temperature side in DSC analysis was low. Residual oil also had an influence, and the rubbing test evaluation was slightly low. In addition, there was no tightening constraint of the woven fabric fibers with permeation of the resin, and the rubbing test evaluation after passage of time in moist heat was markedly poor. Because of the lack of resin permeation and low constraint between the fibers, the stitch air permeability and stitch air permeability after passage of time with heat-moist treatment were both high.

[Comparative Example 8]

Compared to Example 1, no scouring was carried out after weaving, and the curing temperature was changed to 180°C. Also, coating was performed in the coating step with a silicone coating fluid comprising 18 parts by weight of a solventless methylvinylsilicone resin with a viscosity of 500,000 cP, 43 parts by weight of a solventless methylvinylsilicone resin with a viscosity of 20,000 cP and 39 parts by weight of a toluene solvent, using a floating knife coater, and the coating amount was 30 g/m$^2$. The evaluation results are shown in Table 1.

Without scouring, there was no relaxation of constraint of the polyamide fiber weaving yarn, and permeation was suppressed, despite low viscosity by solvent dilution, to an insufficient level. Contraction occurred in the curing step resulting in constraint of the weaving yarn, but due to low permeation of the resin, the ratio of heat absorption on the high-temperature side in DSC analysis was low. Residual oil also had an influence, and the rubbing test evaluation was slightly low. In addition, there was no tightening constraint of the woven fabric fibers with permeation of the resin, and the rubbing test evaluation after passage of time in moist heat was markedly poor. Because of the lack of resin permeation and low constraint between the fibers, the stitch air permeability and stitch air permeability after passage of time with heat-moist treatment were both high.

[Table 1]

Table 1

| | Example 1 | Example 2 | Example 3 | Example 4 | Example 5 | Example 6 | Example 7 | Comp. Example 1 | Comp. Example 2 | Comp. Example 3 | Comp. Example 4 | Comp. Example 5 | Comp. Example 6 | Comp. Example 7 | Comp. Example 8 |
|---|---|---|---|---|---|---|---|---|---|---|---|---|---|---|---|
| Curing shrinkage [%] | 2.6 | 2.4 | 2.0 | 1.5 | 1.5 | 2.6 | 1.5 | 0.5 | 0.5 | 1.0 | 1.4 | 0.5 | 0.5 | 4.2 | 4.2 |
| Curing temperature [°C] | 210 | 200 | 190 | 150 | 150 | 210 | 210 | 180 | 180 | 180 | 180 | 0.5 | 0.5 | 180 | 180 |
| Resin coating amount [g/m$^2$] | 25 | 25 | 25 | 25 | 25 | 35 | 25 | 25 | 25 | 25 | 25 | 190 | 190 | 25 | 30 |
| Oil adhesion rate pick up [%] | 0.08 | 0.08 | 0.07 | 0.07 | 0.07 | 0.08 | 0.08 | 0.03 | 0.05 | 0.03 | 0.05 | 23 | 18 | 0.20 | 0.20 |
| Flatness difference | 1.0 | 1.0 | 1.0 | 1.0 | 1.4 | 1.0 | 1.0 | 0.8 | 0.08 | 0.8 | 0.05 | 0.20 | 0.20 | 2.0 | 2.0 |
| Ratio of heat absorption on DSC high-temperature side [%] | 67 | 65 | 57 | 52 | 48 | 67 | 53 | 40 | 39 | 35 | 38 | 39 | 2.2 | 30 | 23 |
| Frazier air permeability [cc/cm$^2$/s] | 0 | 0 | 0 | 0 | 0 | 0 | 0 | 0 | 0 | 0 | 0 | 0 | 0 | 0 | 0 |
| Scrubbing count | 400 | 400 | 400 | 400 | 400 | 500 | 400 | 400 | 400 | 400 | 400 | 300 | 200 | 250 | 250 |
| Scrubbing count after passage of time in moist heat | 400 | 400 | 400 | 400 | 400 | 500 | 400 | 200 | 200 | 250 | 250 | 100 | <50 | 150 | 150 |
| Stitch air permeability [mm$^3$/mm/sec] | 1,700 | 1,700 | 1,700 | 2,800 | 4,000 | 900 | 3,000 | 5,500 | 5,500 | 6,000 | 6,000 | 5,500 | 8,500 | 7,500 | 7,000 |

(continued)

| | Example 1 | Example 2 | Example 3 | Example 4 | Example 5 | Example 6 | Example 7 | Comp. Example 1 | Comp. Example 2 | Comp. Example 3 | Comp. Example 4 | Comp. Example 5 | Comp. Example 6 | Comp. Example 7 | Comp. Example 8 |
|---|---|---|---|---|---|---|---|---|---|---|---|---|---|---|---|
| Stitch air permeability increment after passage of time in moist heat [mm³/mm/sec] | 350 | 350 | 350 | 800 | 400 | 300 | 800 | 2,500 | 2,500 | 2,000 | 1,500 | 3,500 | 4,000 | 4,000 | 2,000 |

Industrial Applicability

The woven fabric of the invention is suitable as a woven fabric for an airbag. It is most suitable as a woven fabric for an airbag to be used in a coated sewn airbag with excellent suppression of air permeability.

**Claims**

1. A woven fabric for an airbag comprising synthetic fibers in which a resin has been disposed, wherein in a rising-temperature Differential Scanning Calorimeter (DSC) endothermic curve of the woven fabric, the ratio of the endothermal quantity absorbed on the high-temperature side of the peak temperature of the melting endotherm in the rising-temperature DSC endothermic curve of the constituent yarn of the woven fabric, to the overall heat absorbed, measured as described in the description, exceeds 45%, a silicone resin coating film is disposed in the woven fabric, the synthetic fibers are selected from the group consisting of polyamide fiber and polyester fiber, the oil adhesion rate, measured as described in the description, is 0.005 to 0.20 wt%, the difference between the flatnesses of the warp yarn and weft yarn constituting the woven fabric (spread of filaments in planar direction/spread of filaments in thickness direction), measured as described in the description, is 1.8 or lower, and the resin is disposed as a coating film in the woven fabric, the resin amount, measured as described in the description, being 10 to 50 g/m$^2$.

2. The woven fabric according to claim 1, wherein the ratio of the endothermal quantity absorbed on the high-temperature side of the peak temperature of the melting endotherm in the rising-temperature DSC endothermic curve of the constituent yarn of the woven fabric, to the overall heat absorbed, measured as described in the description, exceeds 50%.

3. The woven fabric according to claim 1 or 2, wherein the peel resistance, measured as described in the description, is 200 times or greater, in a scrubbing test after 100 hours of exposure to an environment of 95% RH, 85°C.

4. The woven fabric according to any one of claims 1 to 3, wherein the stitch air permeability increment, measured as described in the description, is 1,000 mm$^3$/mm/sec or less after 100 hours of exposure to an environment of 95% RH, 85°C.

5. The woven fabric according to any one of claims 1 to 4, wherein the synthetic fiber is polyamide 66 fiber.

6. The woven fabric according to any one of claims 1 to 5, wherein the air tangling of the synthetic fiber used for weaving, measured as described in the description, is 5 to 30 times/m.

7. A process for the production of the woven fabric according to any one of claims 1 to 6, wherein the process comprises the following sequence of steps: weaving non-twisted, non-sized polyamide or polyester synthetic fiber with a water jet loom, scouring it at no higher than 70°C, drying treatment at no higher than 120 °C, coating a silicone resin in the woven fabric, and then curing at 150 °C or higher so that the degree of contraction is 1.5 % or greater as the total shrinkage in the warp and weft directions.

8. The process according to claim 7, the resin coating film is disposed by a solventless silicone resin-containing coating fluid with a viscosity of greater than 20,000 mPa·s (cP) and less than 500,000 mPa·s (cP).

9. The process according to claim 8, wherein the coating fluid contains 1 to 10 wt% of a low-molecular-weight alkoxysilane having a molecular weight of 500 or lower.

10. The process according to claim 8 or 9, wherein the silicone resin contains no greater than 45 wt% of low-viscosity silicone of 10,000 mPa·s (cP) or lower.

11. The process according to any one of claims 7 to 10, further comprising a step of heat contraction of 1.5% or greater due to crosslinking of the resin.

12. An airbag employing the woven fabric according to any one of claims 1 to 6.

**Patentansprüche**

1. Textilgewebe für einen Airbag, das synthetische Fasern umfasst, in denen ein Harz abgeschieden wurde, wobei in einer bei steigender Temperatur mit einem dynamischen Differenzkalorimeter (DSC) aufgezeichneten endothermen Kurve des Textilgewebes das Verhältnis der endothermen Größe, die auf der Hochtemperaturseite der Spitzentemperatur der Schmelzendotherme in der bei steigender Temperatur mit einem DSC aufgezeichneten endothermen Kurve des konstituierenden Garns des Textilgewebes absorbiert wurde, zu der absorbierten Gesamtwärme, die so gemessen wird, wie es in der Beschreibung beschrieben ist, 45% übersteigt, ein Silikonharz-Beschichtungsfilm in dem Textilgewebe abgeschieden wird, die synthetischen Fasern aus der Gruppe ausgewählt sind, die aus Polyamidfaser und Polyesterfaser besteht, die Öladhäsionsrate, die so gemessen wird, wie es in der Beschreibung beschrieben ist, 0,005 bis 0,20 Gew.-% beträgt, die Differenz zwischen der Flachheit des Kettgarns und des Schussgarns, die das Textilgewebe bilden (Ausbreitung der Filamente in planarer Richtung/Ausbreitung der Filamente in Richtung der Dicke), welche so gemessen wird, wie es in der Beschreibung beschrieben ist, 1,8 oder weniger beträgt und das Harz als Beschichtungsfolie in dem Textilgewebe abgeschieden ist, wobei die Harzmenge, die so gemessen wird, wie es in der Beschreibung beschrieben ist, 10 bis 50 g/m$^2$ beträgt.

2. Textilgewebe gemäß Anspruch 1, wobei das Verhältnis der endothermen Größe, die auf der Hochtemperaturseite der Spitzentemperatur der Schmelzendotherme in der bei steigender Temperatur mit einem DSC aufgezeichneten endothermen Kurve des konstituierenden Garns des Textilgewebes absorbiert wurde, zu der absorbierten Gesamtwärme, die so gemessen wird, wie es in der Beschreibung beschrieben ist, 50% übersteigt.

3. Textilgewebe gemäß Anspruch 1 oder 2, wobei die Schälfestigkeit, die so gemessen wird, wie es in der Beschreibung beschrieben ist, in einem Scheuertest nach 100 Stunden Einwirkung einer Umgebung mit 95% relativer Feuchtigkeit und 85 °C das 200-fache oder mehr beträgt.

4. Textilgewebe gemäß einem der Ansprüche 1 bis 3, wobei das Inkrement der Nahtluftdurchlässigkeit, das so gemessen wird, wie es in der Beschreibung beschrieben ist, nach 100 Stunden Einwirkung einer Umgebung mit 95% relativer Feuchtigkeit und 85 °C 1000 mm$^3$/mm/s oder weniger beträgt.

5. Textilgewebe gemäß einem der Ansprüche 1 bis 4, wobei die synthetische Faser eine Polyamid-66-Faser ist.

6. Textilgewebe gemäß einem der Ansprüche 1 bis 5, wobei die Luftverschlingung der zum Weben verwendeten synthetischen Faser, die so gemessen wird, wie es in der Beschreibung beschrieben ist, 5 bis 30/m beträgt.

7. Verfahren zur Herstellung des Textilgewebes gemäß einem der Ansprüche 1 bis 6, wobei das Verfahren die folgende Abfolge von Schritten umfasst:

   Verweben einer nicht verzwirnten, nicht geschlichteten synthetischen Polyamid- oder Polyesterfaser mit einer Wasserstrahl-Webmaschine;
   Abkochen des Gewebes bei nicht mehr als 70 °C;
   Trocknungsbehandlung bei nicht mehr als 120 °C;
   Imprägnieren des Textilgewebes mit einem Silikonharz; und dann
   Härten bei 150 °C oder mehr, so dass der Grad der Kontraktion 1,5% oder mehr als Gesamtschrumpfung in Kett- und Schussrichtung beträgt.

8. Verfahren gemäß Anspruch 7, wobei der Harzbeschichtungsfilm durch eine lösungsmittelfreie, silikonharzhaltige Beschichtungsflüssigkeit mit einer Viskosität von mehr als 20 000 mPa·s (cP) und weniger als 500 000 mPa·s (cP) abgeschieden wird.

9. Verfahren gemäß Anspruch 8, wobei die Beschichtungsflüssigkeit 1 bis 10 Gew.-% eines niedermolekularen Alkoxysilans mit einem Molekulargewicht von 500 oder weniger enthält.

10. Verfahren gemäß Anspruch 8 oder 9, wobei das Silikonharz nicht mehr als 45 Gew.-% Silikon niedriger Viskosität von 10 000 mPa·s (cP) oder weniger enthält.

11. Verfahren gemäß einem der Ansprüche 7 bis 10, weiterhin umfassend einen Schritt der Wärmekontraktion von 1,5% oder mehr aufgrund der Vernetzung des Harzes.

**12.** Airbag, bei dem das Textilgewebe gemäß einem der Ansprüche 1 bis 6 eingesetzt wird.


**Revendications**

**1.** Tissu tissé pour coussin gonflable de sécurité comprenant des fibres synthétiques dans lesquelles une résine a été disposée, dans lequel, dans une courbe endothermique de calorimètre à balayage différentiel (DSC) à température croissante du tissu tissé, le rapport de la quantité endothermique absorbée du côté haute température de la température pic de l'endotherme de fusion dans la courbe endothermique de DSC à température croissante du fil constitutif du tissu tissé, à la chaleur totale absorbée, mesuré comme décrit dans la description, dépasse 45 %, un film de revêtement en résine de silicone est disposé dans le tissu tissé, les fibres synthétiques sont choisies dans le groupe constitué par les fibres de polyamide et les fibres de polyester, le taux d'adhérence de l'huile, mesuré comme décrit dans la description, est de 0,005 à 0,20 % en poids, la différence entre les planéités du fil de chaîne et du fil de trame constituant le tissu tissé (étalement de filaments dans la direction plane/étalement de filaments dans la direction de l'épaisseur), mesurée comme décrit dans la description, est égale ou inférieure à 1,8, et la résine est disposée en tant que film de revêtement dans le tissu tissé, la quantité de résine, mesurée comme décrit dans la description, étant de 10 à 50 g/m$^2$.

**2.** Tissu tissé selon la revendication 1, dans lequel le rapport de la quantité endothermique absorbée du côté haute température de la température pic de l'endotherme de fusion dans la courbe endothermique de DSC à température croissante du fil constitutif du tissu tissé, à la chaleur totale absorbée, mesuré comme décrit dans la description, dépasse 50 %.

**3.** Tissu tissé selon la revendication 1 ou 2, dans lequel la résistance au pelage, mesurée comme décrit dans la description, est égale ou supérieure à 200 fois dans un test de nettoyage après 100 heures d'exposition à un environnement de 95 % d'humidité relative, et 85°C.

**4.** Tissu tissé selon l'une quelconque des revendications 1 à 3, dans lequel l'augmentation de la perméabilité à l'air du point, mesurée comme décrit dans la description, est égale ou inférieure à 1 000 mm$^3$/mm/s après 100 heures d'exposition à un environnement de 95 % d'humidité relative, et 85°C.

**5.** Tissu tissé selon l'une quelconque des revendications 1 à 4, dans lequel la fibre synthétique est une fibre de polyamide 66.

**6.** Tissu tissé selon l'une quelconque des revendications 1 à 5, dans lequel l'enchevêtrement à l'air de la fibre synthétique utilisée pour le tissage, mesuré comme décrit dans la description, est de 5 à 30 fois/m.

**7.** Procédé de production du tissu tissé selon l'une quelconque des revendications 1 à 6, dans lequel le procédé comprend la séquence d'étapes suivante :

tissage de fibres synthétiques de polyamide ou de polyester non torsadées, non dimensionnées, avec un métier à jet d'eau,
récurage de celui-ci à pas plus de 70°C, traitement de séchage à pas plus de 120°C,
revêtement d'une résine de silicone dans le tissu tissé, puis
durcissement à 150°C ou plus, de sorte que le degré de contraction soit égal ou supérieur à 1,5 % en tant que rétraction totale dans les directions de chaîne et de trame.

**8.** Procédé selon la revendication 7, dans lequel le film de revêtement de résine est disposé par un fluide de revêtement contenant une résine de silicone sans solvant ayant une viscosité supérieure à 20 000 mPa.s (cP) et inférieure à 500 000 mPa.s (cP).

**9.** Procédé selon la revendication 8, dans lequel le fluide de revêtement contient 1 à 10 % en poids d'un alcoxysilane de bas poids moléculaire ayant un poids moléculaire de 500 ou moins.

**10.** Procédé selon la revendication 8 ou 9, dans lequel la résine de silicone ne contient pas plus de 45 % en poids de silicone de faible viscosité de 10 000 mPa.s (cP) ou moins.

**11.** Procédé selon l'une quelconque des revendications 7 à 10, comprenant en outre une étape de contraction thermique

**EP 3 034 686 B1**

de 1,5 % ou plus en raison de la réticulation de la résine.

**12.** Coussin gonflable de sécurité utilisant le tissu tissé selon l'une quelconque des revendications 1 à 6.

**17**

# FIG. 1

Woven fabric DSC endotherm peak

# FIG. 2

Constituent yarn (warp) DSC endotherm peak

# FIG. 3
Constituent yarn (weft) DSC endotherm peak

# FIG. 4
Scoured woven fabric DSC endotherm peak

**EP 3 034 686 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012052280 A
- JP 2004149992 A
- JP 2004124321 A